Europäisches Patentamt

European Patent Office

Office européen des brevets

(11) Numéro de publication: **0 230 651**
**A1**

(12) ——— **DEMANDE DE BREVET EUROPEEN**

(21) Numéro de dépôt: **86117995.0**

(22) Date de dépôt: **23.12.86**

(51) Int. Cl.4: **H02K 41/00**

(30) Priorité: **27.12.85 FR 8519352**

(43) Date de publication de la demande:
**05.08.87 Bulletin 87/32**

(84) Etats contractants désignés:
**CH DE FR GB IT LI NL SE**

(71) Demandeur: **ATELIER D'ELECTROTHERMIE ET DE CONSTRUCTIONS SPECIALES (AET) Société anonyme dite Chemin des Malachers F-38240 Meylan(FR)**

(72) Inventeur: **Yonnet, Jean-Paul 24, Rue du Champ Rochas F-38240 Meylan(FR)**
Inventeur: **Penelon, Joel 8, Rue des Boisses F-38240 Meylan(FR)**

(74) Mandataire: **Casalonga, Axel et al BUREAU D.A. CASALONGA - JOSSE Morassistrasse 8 D-8000 Munich 5(DE)**

(54) **Dispositif de création d'un champ magnétique glissant, en particulier pour traitement ionique sous champ magnétique.**

(57) Dispositif de création d'un champ magnétique glissant, à module sensiblement constant, dans une zone utile (11a), en utilisant des aimants permanents mobiles, ces aimants permanents formant des barreaux cylindriques (1) à aimantation diamètrale ou radiale, à une ou plusieurs paires de pôles, juxtaposés avec leurs axes parallèles et équidistants (E), placés dans un même plan (A), les aimantations (J) des barreaux (1) étant successivement décalées angulairement d'un angle constant, les divers barreaux (1) étant entraînés en rotation autour de leur axe à la même vitesse angulaire et dans le même sens, et la distance (Y) entre ladite zone utile (11a) et le plan (A) des axes des barreaux (1) étant au moins égale à 0,75 fois la distance (E) entre les axes de deux barreaux successifs.

FIG.1

## Dispositif de création d'un champ magnétique glissant, en particulier pour traitement ionique sous champ magnétique.

L'invention concerne la création d'un champ magnétique glissant, en particulier pour le traitement ionique utilisé pour notamment graver une couche de silice produite sur la surface d'une plaquette de silicium dans la fabrication des semi-conducteurs.

Dans une telle fabrication, on sait que les plaquettes minces de silicium, débitées dans un monocristal, subissent, entre autres opérations, une oxydation superficielle pour réaliser une couche de silice, puis une gravure de cette couche de silice au travers d'un masque en photo-resist. Pour réduire les temps de gravure afin d'augmenter la productivité, on sait qu'il est préférable de remplacer la gravure acide par un réacteur de gravure ionique à plasma froid produit par décharge électrique, dans un mélange gazeux à basse pression, entre une électrode et la plaquette à graver.

On sait d'autre part l'intérêt qu'il y a à placer le réacteur dans un champ magnétique intense pour augmenter l'ionisation du plasma et accroître ainsi l'efficacité des électrons. C'est ce procédé que l'on appelle la gravure ionique sous champ magnétique, ou en terminologie anglo-saxonne, MIE pour Magnetron Ion Etching.

La difficulté provient du fait que l'efficacité de la gravure, ainsi accrue par confinement magnétique du plasma, varie avec l'intensité de ce champ magnétique, et qu'il est extrêmement difficile, avec de simples aimants permanents, de réaliser un champ magnétique suffisamment intense et suffisamment uniforme sur toute l'étendue d'une plaquette de silicium de dimension habituelle.

Devant cette difficulté, il a été proposé d'utiliser des ensembles d'aimants montés en opposition et déplacés sous la plaquette selon un mouvement d'oscillation, ou encore de translation en montant ces aimants sur une chaîne sans fin, de telle manière que chaque point du plasma situé au-dessus de la plaquette soit le siège d'un champ magnétique variable mais dont la moyenne dans le temps est constante.

Toutefois, la réalisation mécanique de ces dispositifs oscillants ou à chaîne sans fin est relativement complexe en raison notamment des efforts importants auxquels sont soumis les aimants eux-mêmes.

La présente invention a pour but notamment de remédier aux inconvénients ci-dessus et propose un dispositif permettant de produire un champ magnétique glissant à l'aide d'un dispositif d'une réalisation mécanique nettement plus simple.

Le dispositif de création d'un champ magnétique glissant, à module sensiblement constant dans une zone utile, en utilisant des aimants permanents mobiles est tel que ces aimants permanents forment des barreaux cylindriques à aimantation diamètrale ou radiale, à une ou plusieurs paires de pôles, juxtaposés avec leurs axes parallèles et équidistants dans un même plan, les aimantations des barreaux étant successivement décalées angulairement d'un angle constant, les divers barreaux étant entraînés en rotation autour de leur axe à la même vitesse angulaire et dans le même sens. De plus, la distance séparant ladite zone utile et le plan des axes desdits barreaux est de préférence au moins égale à 0,75 fois la distance entre les axes de deux barreaux successifs.

Dans une réalisation préférentielle de l'invention, le décalage angulaire de deux barreaux successifs est compris entre 70° et 90° (quadrature), divisés par le nombre de paires de pôles que présentent les barreaux.

Conformément à la présente invention, la distance entre ladite zone utile et le plan des axes desdits barreaux est de préférence comprise entre une fois et une fois et demie la distance entre les axes de deux barreaux successifs.

Conformément à la présente invention, la longueur desdits barreaux dépasse de préférence au-delà de ladite zone utile d'au moins une fois l'entraxe des barreaux à chaque extrémité.

Conformément à la présente invention, la succession des barreaux dépasse de préférence ladite zone utile d'au moins un barreau supplémentaire à chaque extrémité.

La présente invention sera mieux comprise à l'étude d'un mode de réalisation particulier, dans une application particulière, décrit à titre d'exemple non limitatif et illustré sur le dessin sur lequel :

-la figure 1 est une coupe verticale d'un réacteur de traitement par plasma et des barreaux aimantés ;

-et la figure 2 est une vue en perpective des barreaux aimantés et de leur entraînement ;

Si l'on considère tout d'abord un barreau unique cylindrique 1, dont l'aimantation diamètrale est définie par un vecteur J, et que l'on fait tourner ce barreau autour de son axe avec une vitesse angulaire constante dans le sens de la flèche 2, ce barreau produit, en tous points de l'espace tel que P, un champ d'induction magnétique représentable par un vecteur situé dans un plan perpendiculaire à l'axe du barreau 1, tout au moins si le point P est suffisamment éloigné des extrémités de ce barreau, et l'on constate que ce vecteur possède un module constant et tourne lui-même autour du point P avec une vitesse uniforme égale à la vitesse de rotation du barreau 1 mais en sens inverse.

Si l'on juxtapose maintenant plusieurs barreaux identiques au barreau 1 avec leurs axes parallèles et régulièrement espacés dans un plan A, les vecteurs J de chaque barreau étant successivement décalés d'un angle constant les uns par rapport aux autres, on constate qu'en chaque point P de l'espace, les inductions produites par les divers barreaux se superposent et produisent une induction magnétique résultante. Cette résultante possède aussi un module constant et tourne autour du point P à la même vitesse angulaire, inverse de celle des barreaux.

Si l'on considère maintenant la répartition spatiale du champ tout autour de ce même point P, on constate que tout se passe comme si ce champ résultait d'une configuration figée qui se déplacerait en translation dans un sens représenté par la flèche 3 avec une vitesse uniforme. Cette configuration figée possède une structure en bandes alternativement nord et sud permettant de définir un pas polaire, et naturellement le champ glissant avance d'un tel pas chaque fois que les barreaux 1 ont fait un tour. Par ailleurs, ce pas est tout naturellement égal à la distance entre les axes de deux barreaux 1 dont les vecteurs J sont parallèles et équipollents.

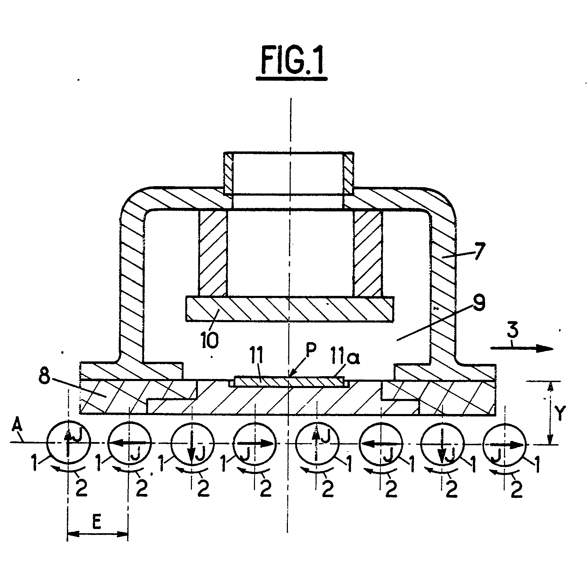

A titre d'exemple, le décalage angulaire successif des aimantations J des barreaux 1 peut être de 180°, auquel cas le pas polaire du champ glissant est de deux fois l'entraxe E des barreaux. Toutefois, une telle disposition présente un couple très fortement variable pour l'entraînement de l'ensemble des barreaux en raison de leurs attractions et répulsions mutuelles. Pour cette raison, il est préférable de donner un décalage angulaire de 120° entre les aimantations de deux barreaux successifs, ou mieux encore, un décalage angulaire compris entre 70° et 90° comme dans l'exemple représenté sur la figure 1.

Pour 90°, chaque barreau est alors déphasé en quadrature par rapport au précédent, et le pas polaire du champ glissant est égal à quatre fois l'entaxe E.

Lorsque le décalage angulaire est compris entre 70° et 90° pour des barreaux à aimantation diamètrale ou ces valeurs divisées par le nombre de paires de pôles, le couple d'entraînement de la série de barreaux 1 est réduit.

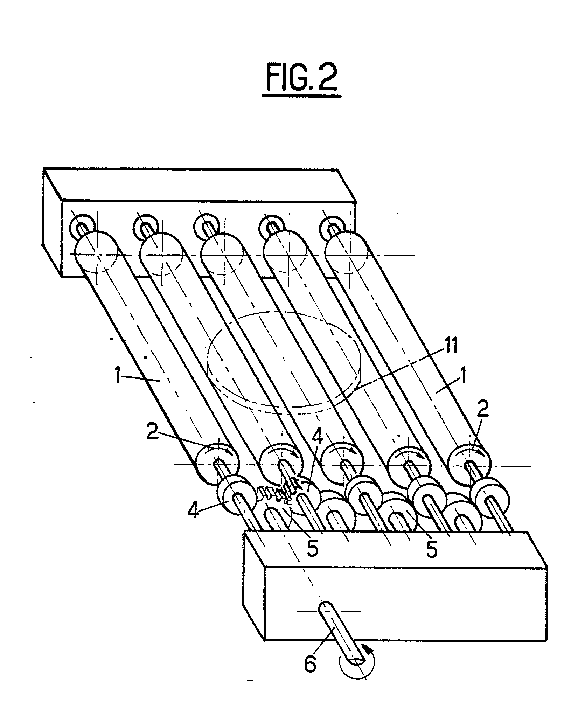

Un tel dispositif permet donc, par des moyens purement mécaniques, de réaliser un champ magnétique glissant ayant l'intensité et la vitesse désirée. L'entraînement simultané des divers barreaux à la même vitesse et dans le même sens peut être obtenu simplement, comme représenté sur la figure 2, par une alternance d'engrenages 4 calés sur l'axe des barreaux successifs, et d'engrenages 5 en prise avec deux engrenages 4 successifs, l'un au moins de ces engrenages 5 ou des axes des rouleaux 1 étant lui-même entraîné par l'axe 6 d'un motoréducteur approprié qui n'a pas besoin d'être très puissant quand le couple d'entraînement est réduit.

Un tel dispositif peut par exemple servir d'inducteur linéaire pour le déplacement de particules ionisées. Il peut également servir à produire un chauffage par induction ou un traitement médical - (diathermie). Pour ces applications, l'uniformité du champ n'est pas en général une condition nécessaire.

Au contraire, pour l'application principale envisagée plus haut, on a vu que l'uniformité du champ d'induction, en particulier dans le sens du plan horizontal, constitue l'élément déterminant. Une bonne homogénéité, c'est à dire, un module du champ magnétique sensiblement uniforme, ne peut être obtenue que si la distance Y entre le plan A des axes des barreaux 1 et le plan où l'on fait la mesure est supérieure à 0,75 fois l'entraxe E.

Un résultat particulièrement uniforme est obtenu si l'on utilise une distance Y comprise entre une fois et une fois et demie l'entraxe E.

On voit sur la figure 1 un réacteur de gravure ionique constitué par une paroi supérieure 7 raccordée de manière étanche avec une paroi inférieure 8 pour constituer l'enceinte 9 du réacteur, contenant le mélange gazeux de réaction à basse pression ainsi qu'une électrode supérieure 10 permettant d'engendrer un plasma froid par décharge électrique entre cette électrode 10 et la plaquette 11 à graver, portée par la paroi inférieure 8. La zone, dans laquelle le champ magnétique glissant créé par les barreaux tournants 1 est utile, est constituée par l'espace situé juste au-dessus de la face supérieure 11a de la plaquette 11 à traiter qui dans l'exemple est parallèle au plan A des axes des barreaux 1. On voit que l'écartement Y indiqué n'est pas un inconvénient puisqu'il est justement nécessaire pour loger l'épaisseur de la plaquette 11 et de la paroi 8.

Dans un exemple, on peut utiliser des barreaux 1 en Samarium-Colbat d'induction J = 1 tesla de 10 mm de diamètre aimantés diamétralement et espacés de E = 20 mm pour produire à la distance Y = 25 mm un champ de 400 Gauss relativement uniforme dans toute l'étendue horizontale de la zone utile 11a, à condition que la longueur des barreaux dépasse l'étendue de cette zone utile 11a d'au moins une fois l'entraxe E des barreaux à chaque extrémité, et que l'on ait également dans le sens perpendiculaire au moins un barreau supplémentaire à chaque extrémité au-delà de l'aplomb de cette zone utile, comme il apparait sur la figure 1. Dans les mêmes conditions on peut obtenir un champ de 600 Gauss avec un diamètre de barreaux de 12,5 mm, un entraxe E de 20 mm et une distance Y de 25 mm.

L'invention permet ainsi de réaliser un champ relativement intense et relativement uniforme sur une grande étendue, sans nécessiter de lourds aimants ni une disposition mécanique complexe. En particulier, les valeurs du champ indiquées permettent déjà un confinement magnétique du plasma susceptible d'augmenter la densité ionique d'environ dix fois, ce qui est un résultat remarquable. Naturellement, l'uniformité du champ magnétique glissant s'étend dans les deux sens du plan horizontal, alors que dans le sens vertical, on observe en fait une décroissance rapide au fur et à mesure que Y augmente. Toutefois, cet effet est sans inconvénient pour l'application envisagée.

## Revendications

1. Dispositif de création d'un champ magnétique glissant, à module sensiblement constant, dans une zone utile (11a), en utilisant des aimants permanents mobiles,caractérisé par le fait que ces aimants permanents forment des barreaux cylindriques (1) à aimantation diamètrale ou radiale, à une ou plusieurs paires de pôles, juxtaposés avec leurs axes parallèles et équidistants (E), placés dans un même plan (A), les aimantations - (J) des barreaux (1) étant successivement décalées angulairement d'un angle constant, les divers barreaux (1) etant entraînés en rotation autour de leur axe à la même vitesse angulaire et dans le même sens, et la distance (Y) séparant ladite zone utile - (11a) et le plan (A) des axes des barreaux (1) étant au moins égale à 0,75 fois la distance (E) entre les axes de deux barreaux successifs.

2. Dispositif selon la revendication 1, caractérisé par le fait que ledit décalage angulaire est compris entre 70° et 90° (quadrature), divisés par le nombre de paires de pôles.

3. Dispositif selon l'une des revendications 1 et 2, caractérisé par le fait que la distance (Y) entre ladite zone utile (11a) et le plan (A) des axes des barreaux (1) est comprise entre une fois et une fois et demie la distance (E) entre les axes de deux barreaux successifs (1).

4. Dispositif selon l'une quelconque des revendications précédentes, caractérisé par le fait que la longueur desdits barreaux (1) dépasse au-delà de ladite zone utile (11a) d'au moins une fois l'entraxe (E) des barreaux à chaque extrémité.

5. Dispositif selon l'une quelconque des revendications précédentes, caractérisé par le fait que la succession des barreaux (1) dépasse ladite zone utile (11a) d'au moins un barreau supplémentaire à chaque extrémité.

6. Dispositif selon l'une quelconque des revendications précédentes, caractérisé par le fait qu'il est associé à un réacteur de traitement (9) par plasma et qu'il est disposé de telle sorte que la surface des pièces à traiter se situe dans ladite zone utile (11a).

## FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 864 587 (LANDRY)<br>* Colonne 2, lignes 3-43; figures 1,2 * | 1 | H 02 K 41/00 |
| | --- | | |
| A | DE-C- 885 276 (TITTEL)<br>* Page 2, lignes 59-65,116-121 * | 1 | |
| | --- | | |
| A | US-A-3 903 808 (FOLDES) | | |
| | --- | | |
| A | US-A-4 100 441 (LANDRY) | | |
| | ----- | | |

DOMAINES TECHNIQUES
RECHERCHES (Int. Cl.4)

H 02 K

Le présent rapport de recherche a été établi pour toutes les revendications

| Lieu de la recherche | Date d'achèvement de la recherche | Examinateur |
|---|---|---|
| LA HAYE | 27-03-1987 | BIJN E.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82